# EUROPEAN PATENT SPECIFICATION

(11) **EP 2 599 620 B1**
(45) Date of publication and mention of the grant of the patent: **22.11.2017**
(21) Application number: 12166753.9
(22) Date of filing: 04.05.2012
(51) Int. Cl.: B32B 7/02, B44C 3/02, B32B 3/26

(54) **Plastic article and method for manufacturing same**
Kunststoffartikel und Herstellungsverfahren dafür
Article en plastique et son procédé de fabrication

(30) Priority: 03.12.2011 CN 201110395486
(43) Date of publication of application: 05.06.2013
(73) Proprietor: Shenzhen Futaihong Precision Industry Co., Ltd., Shenzhen City, Guangdong Province 518109 (CN); FIH (Hong Kong) Limited, Cheung Sha Wan Kowloon, Hong Kong (CN)
(72) Inventor: Zou, Zhi-Qing, Shenzhen City, Guangdong Province (CN); Xu, Qiu-Jiang, Shenzhen City, Guangdong Province (CN); Ho, Po-Feng, Tu-Cheng New Taipei (TW); Lin, He-Xian, Shenzhen City, Guangdong Province (CN)
(74) Representative: Fyfe, Fiona Allison Watson

(56) References cited:
- EP-A2- 0 101 968
- EP-A2- 0 465 356
- FR-A1- 2 836 415
- FR-A1- 2 836 416
- US-A- 4 871 503

## Description

### BackGround

### Field

The exemplary disclosure generally relates to plastic articles and a method for manufacturing the plastic articles.

### BackGround

Repeatedly anodizing and laser engraving, insert molding, and ink printing are used to form a three-dimensional pattern on the housing of portable electronic devices, to improve appearance of housings. The housings may be presented with a colorful appearance, but cannot present with a three-dimensional, transparent and embossed pattern appearance like a crystal.

Therefore, there is room for improvement within the art.

### Summary

According to one aspect of the disclosure, a plastic article is provided. A plastic article comprises a first plastic substrate and a second plastic substrate formed on the first plastic substrate. The refractive index of the first plastic substrate is different than the refractive index of the second plastic substrate. The first plastic substrate comprises a first surface abutting the second plastic substrate. The first surface has a first pattern. The first pattern comprises a plurality of first convex portions.

According to another aspect of the disclosure, a method for manufacturing the plastic articles is provided. The method includes: providing a first plastic substrate, the first plastic substrate comprises a first surface, the first surface has a first pattern, the first pattern comprises a plurality of first convex portions; forming a second plastic substrate on the first plastic substrate, the refractive index of the first plastic substrate is different than the refractive index of the second plastic substrate, the first plastic substrate comprises a first surface abutting the second plastic substrate, the second plastic substrate is transparent or translucent.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the exemplary plastic article and method for manufacturing the plastic article. Moreover, in the drawings like reference numerals designate corresponding parts throughout the several views. Wherever possible, the same reference numbers are used throughout the drawings to refer to the same or like elements of an embodiment.
FIG. 1 is a perspective view of an exemplary embodiment of plastic article.
FIG. 2 is a cross-sectional view of the plastic article of FIG. 1 taken along line II- II.
FIG. 3 is a schematic view of a molding tool for manufacturing the plastic article of FIG. 1.
FIG. 4 another schematic view of a molding tool for manufacturing the plastic article of FIG. 1.

### DETAILED DESCRIPTION

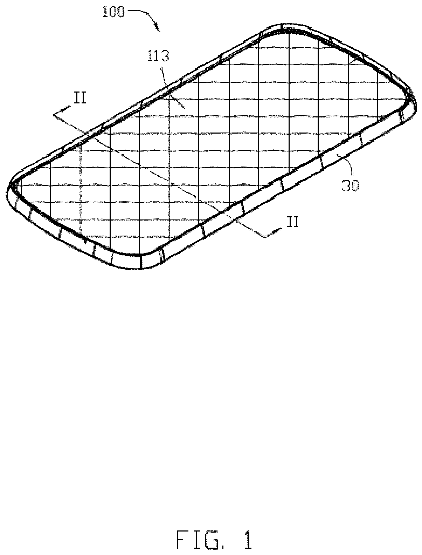

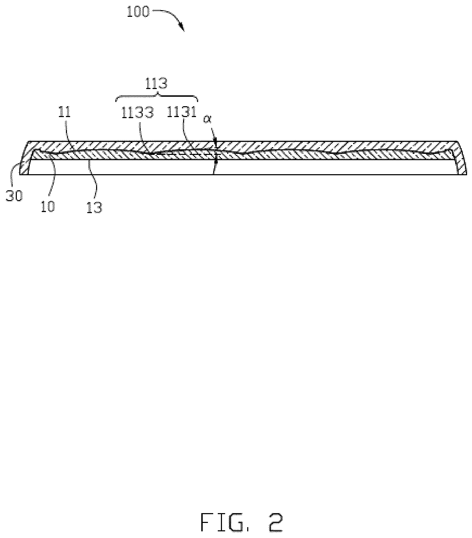

FIG. 1 shows an exemplary embodiment of a plastic article. Referring also to FIG. 2, a plastic article 100 comprises a first plastic substrate 10 and a second plastic substrate 30 formed on the first plastic substrate 10. The first plastic substrate 10 and the second plastic substrate 30 are respectively formed by different material to make the refractive index of the first plastic substrate 10 is different than the refractive index of the second plastic substrate 30.

The first plastic substrate 10 comprises a first surface 11 abutting the second plastic substrate 30, and an opposite second surface 13. The first surface 11 has a first pattern which is formed by injection moulding or laser engraving. The first pattern comprises a plurality of convex portions 113. The projected area of the convex portions 113 in the second surface 13 is about 0.8 × 0.8 mm² to about 2 × 2 mm², preferably 1 × 1 mm². The convex portion 113 has a first highest point 1131 and a first lowest point 1133. The value of angle α between the line 1131-1133 and the horizontal is about 15° to about 35°. The height difference between the first highest point 1131 and first lowest point 1133 is about 0.3 mm to about 0.6 mm, preferably 0.5 mm.

The plastic article 100 can be formed by double color molding, insert molding, injection molding or reaction injection molding.

The first plastic substrate 10 is transparent. The first plastic substrate 10 can be made of material selected from a group consisting of polycarbonate (PC), polymethyl methacrylate (PMMA), polyethylene (PE), polyamide (PA), acrylonitrile-butadiene-styrene plastics (ABS), Polyurethane(PU), a mixture of polycarbonate and glass fiber (PC+GF) and a mixture of polycarbonate and polyethylene terephthalate (PC+PET), preferably polymethyl methacrylate (PMMA) or polycarbonate (PC).

The second plastic substrate 30 is transparent. The second plastic substrate 30 can be made of material selected from a group consisting of PMMA, PA, ABS, PU, epoxy resin, a mixture of PC+GF and a mixture of PC+PET, preferably epoxy resin.

Because the refractive index of the first plastic substrate 10 is different than the refractive index of the second plastic substrate 30, light will refract when light passes from the first plastic substrate 10 to the second plastic substrate 30. Thus, the user can view the embossed first pattern on the second plastic substrate 30. Additionally, since the first plastic substrate 10 and the second plastic substrate 30 are transparent or translucent, under the refraction of light, the first pattern has a three-dimensional and transparent appearance like a crystal.

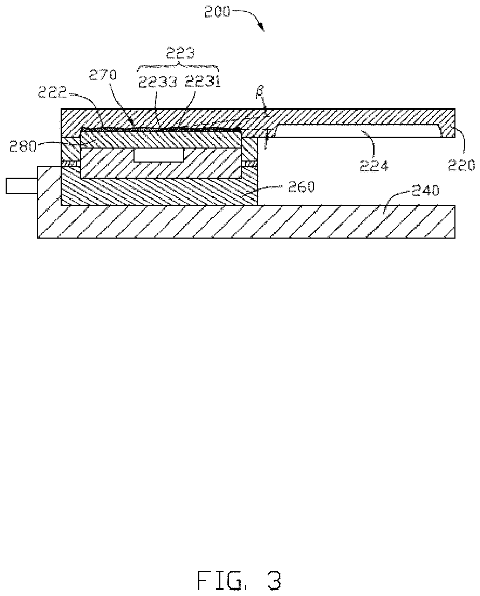

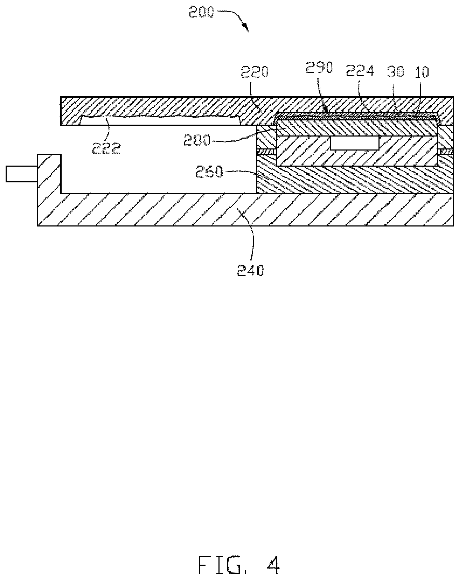

Referring to Fig. 3 and Fig. 4, a method for manufacturing the plastic article 100 may includes at least the following steps:

A molding tool 200 is provided. The molding tool 200 comprises an upper mold 220, a lower mold 240, a slide block 260 and a core 280. The upper mold 220 defines a first molding cavity 222 which used to forming the first plastic substrate 10, and a second molding cavity 224 which used to forming the second plastic substrate 30. The slide block 260 is slidably fixed to the lower mold 240. The core 280 is fixed to the slide block 260.

The upper mold 220 forms a second pattern on the inclined wall opposite to the core 280. The second pattern comprises a plurality of concave portions 223. The projected area of the concave portions 223 in the upper mold 220 is about 0.8 × 0.8 mm² to about 2×2mm², preferably 1 × 1mm². The concave portion 223 has a second highest point 2131 and a second lowest point 2133. The value of angle β between the line 2131-2133 and the horizontal is about 15° to about 35°. The height difference between the second highest point 2131 and second lowest point 2133 is about 0.3 mm to about 0.6 mm, preferably 0.5 mm.

The first plastic substrate 10 is formed. The first plastic substrate 10 formed by the following steps: sliding the slide block 260 to make the core 280 alignment with the first molding cavity 222 to form a first molding chamber 270 between the first molding cavity 222 and the core 280; and introducing a melted plastic material into the first molding chamber 270 by an injection unit; then cooling the molding tool 200, so that the melted plastic material will solidify to form the first plastic substrate 10. The first plastic substrate 10 comprises a first surface 11 abutting the inclined wall of the upper mold 220. The first surface 11 presented with a first pattern which is corresponding to the second pattern. The plastic material used to form the first plastic substrate 10 is selected from a group consisting of PC, PMMA, PE, PA, ABS, PU, a mixture of PC+GF and a mixture of PC+PET, preferably PMMA or PC.

Referring to FIG. 4, the slide block 260 is slid to make the core 280 alignment with the second molding cavity 224 to form a second molding chamber 290 between the first molding cavity 222 and the core 280. Then, introducing a melted plastic material into the second molding chamber 290 by an injection unit. Cooling the molding tool 200, so that the melted plastic material will solidify to form the second plastic substrate 30 on the first plastic substrate 10. The plastic material used to form the second plastic substrate 30 is selected from a group consisting of PMMA, PA, ABS, PU, epoxy resin, a mixture of PC+GF and a mixture of PC+PET, preferably epoxy resin.

In alternative embodiments, the molding tool 200 further comprises a vacuum pumping device (not shown) which is connected with the first molding chamber 270 and the second molding chamber 290. The vacuum pumping device is used to pump air out the first molding chamber 270 and the second molding chamber 290.

In alternative embodiments, the first molding chamber 270 and the second molding chamber 290 is not limited to set in the same molding tool, the first molding chamber 270 and second molding chamber 290 can be set in different molding tools according to actual needs in production.

In alternative embodiments, the first plastic substrate 10 can be formed by injection molding, and then the first pattern is formed on the first plastic substrate 10 by laser engraving.

In alternative embodiments, adjusting the size and spacing of the concaves 223 of the second pattern can make the plastic articles 100 presented with different shapes three-dimensional and transparent crystal embossed pattern.

It is to be understood, however, that even through numerous characteristics and advantages of the exemplary disclosure have been set forth in the foregoing description, together with details of the system and function of the disclosure, the disclosure is illustrative only, and changes may be made in detail, especially in matters of shape, size, and arrangement of parts within the principles of the disclosure to the full extent indicated by the broad general meaning of the terms in which the appended claims are expressed.

## Claims

1. A plastic article, comprising:
a first plastic substrate, the first plastic substrate being transparent; and
a second plastic substrate formed on the first plastic substrate, the second plastic substrate being transparent;
wherein the refractive index of the first plastic substrate is different than the refractive index of the second plastic substrate, the first plastic substrate comprises a first surface abutting the second plastic substrate, the first surface has a first pattern, the first pattern comprises a plurality of first convex portions.

2. The plastic article as claimed in claim 1, wherein the first plastic substrate further comprises a second surface opposite to the first surface, the projected area of the convex portions in the second surface is 0.8 × 0.8 mm² to 2×2mm².

3. The plastic article as claimed in claim 2, wherein the projected area of the convex portions in the second surface is 1 × 1 mm².

4. The plastic article as claimed in claim 1, wherein the convex portion has a first highest point and a first lowest point, the value of angle between the line of first highest point and a first lowest point and the horizontal is 15° to 35°.

5. The plastic article as claimed in claim 4, wherein the height difference between the first highest point and first lowest point is 0.3 mm to 0.6 mm.

6. The plastic article as claimed in claim 5, wherein the height difference between the first highest point and first lowest point is 0.5 mm.

7. The plastic article as claimed in claim 1, wherein the first plastic substrate is made of material selected from a group consisting of polycarbonate, polymethyl methacrylate, polyethylene, polyamide, acrylonitrile-butadiene-styrene plastics, Polyurethane, a mixture of polycarbonate and glass fiber and a mixture of polycarbonate and polyethylene terephthalate, preferably polymethyl methacrylate or polycarbonate.

8. The plastic article as claimed in claim 1, wherein the second plastic substrate is made of material selected from a group consisting of polymethyl methacrylate, polyamide, acrylonitrile-butadiene-styrene plastics, Polyurethane, epoxy resin, a mixture of polycarbonate and glass fiber and a mixture of polycarbonate and polyethylene terephthalate.

9. The plastic article as claimed in claim 1, wherein the first pattern is formed by injection moulding or laser engraving.

10. A method for manufacturing the plastic article comprising:
providing a first plastic substrate, the first plastic substrate being transparent, the first plastic substrate comprising a first surface, the first surface having a first pattern, the first pattern comprising a plurality of first convex portions;
forming a second plastic substrate on the first plastic substrate, wherein the refractive index of the first plastic substrate is different than the refractive index of the second plastic substrate, the first plastic substrate comprises a first surface abutting the second plastic substrate, the second plastic substrate is transparent.

11. The method of claim 10, wherein the first plastic substrate is formed by the following steps:
providing a molding tool, the molding tool comprises an upper mold, a lower mold, a slide block and a core, the upper mold defines a first molding cavity; the upper mold forms a second pattern on the inclined wall opposite to the core, the second pattern comprises a plurality of concave portions, sliding the slide block to make the core alignment with the first molding cavity to form a first molding chamber between the first molding cavity and the core; introducing a melt plastic material into the molding chamber, and solidified the melt plastic material to form the first plastic substrate; the first pattern is corresponding to the second pattern.

12. The method of claim 11, wherein the concave in the upper mold is 0.8 × 0.8 mm² to 2×2 mm².

13. The method of claim 11, wherein the method of claim 9, wherein the concave in the upper mold is 1 × 1 mm².

14. The method of claim 11, wherein the concave has a second highest point and a second lowest point, the value of angle between the line of second highest point and a second lowest point and the horizontal is 15° to 35°.

15. The method of claim 14, wherein the height difference between the second highest point and second lowest point is 0.3 mm to 0.6 mm.

## Patentansprüche

1. Ein Kunststoffartikel, beinhaltend:
ein erstes Kunststoffsubstrat, wobei das erste Kunststoffsubstrat transparent ist; und
ein auf dem ersten Kunststoffsubstrat gebildetes zweites Kunststoffsubstrat, wobei das zweite Kunststoffsubstrat transparent ist;
wobei sich der Brechungsindex des ersten Kunststoffsubstrats von dem Brechungsindex des zweiten Kunststoffsubstrats unterscheidet, wobei das erste Kunststoffsubstrat eine erste Oberfläche beinhaltet, die an das zweite Kunststoffsubstrat angrenzt, wobei die erste Oberfläche ein erstes Muster aufweist, wobei das erste Muster eine Vielzahl von ersten konvexen Abschnitten beinhaltet.

2. Kunststoffartikel gemäß Anspruch 1, wobei das erste Kunststoffsubstrat ferner gegenüber der ersten Oberfläche eine zweite Oberfläche beinhaltet, wobei der projizierte Bereich der konvexen Abschnitte in der zweiten Oberfläche 0,8 x 0,8 mm² bis 2 x 2 mm² beträgt.

3. Kunststoffartikel gemäß Anspruch 2, wobei der projizierte Bereich der konvexen Abschnitte in der zweiten Oberfläche 1 x 1 mm² beträgt.

4. Kunststoffartikel gemäß Anspruch 1, wobei der konvexe Abschnitt einen ersten höchsten Punkt und einen ersten niedrigsten Punkt aufweist, wobei der Wert des Winkels zwischen der Linie von dem ersten höchsten Punkt und einem ersten niedrigsten Punk und der Horizontalen 15° bis 35° beträgt.

5. Kunststoffartikel gemäß Anspruch 4, wobei der Höhenunterschied zwischen dem ersten höchsten Punkt und dem ersten niedrigsten Punkt 0,3 mm bis 0,6 mm beträgt.

6. Kunststoffartikel gemäß Anspruch 5, wobei der Höhenunterschied zwischen dem ersten höchsten Punkt und dem ersten niedrigsten Punkt 0,5 mm beträgt.

7. Kunststoffartikel gemäß Anspruch 1, wobei das erste Kunststoffsubstrat aus einem Material hergestellt ist, ausgewählt aus einer Gruppe, bestehend aus Polycarbonat, Polymethylmethacrylat, Polyethylen, Polyamid, Acrylnitril-Butadien-Styrol-Kunststoffen, Polyurethan, einer Mischung von Polycarbonat und Glasfaser und einer Mischung von Polycarbonat und Polyethylenterephthalat, vorzugsweise Polymethylmethacrylat oder Polycarbonat.

8. Kunststoffartikel gemäß Anspruch 1, wobei das zweite Kunststoffsubstrat aus einem Material hergestellt ist, ausgewählt aus einer Gruppe, bestehend aus Polymethylmethacrylat, Polyamid, Acrylnitril-Butadien-Styrol-Kunststoffen, Polyurethan, Epoxidharz, einer Mischung von Polycarbonat und Glasfaser und einer Mischung von Polycarbonat und Polyethylenterephthalat.

9. Kunststoffartikel gemäß Anspruch 1, wobei das erste Muster durch Spritzgießen oder Lasergravur gebildet wird.

10. Ein Verfahren zum Fertigen des Kunststoffartikels, beinhaltend:
Bereitstellen eines ersten Kunststoffsubstrats, wobei das erste Kunststoffsubstrat transparent ist, wobei das erste Kunststoffsubstrat eine erste Oberfläche beinhaltet,
wobei die erste Oberfläche ein erstes Muster aufweist, wobei das erste Muster eine Vielzahl von ersten konvexen Abschnitten beinhaltet;
Bilden eines zweiten Kunststoffsubstrats auf dem ersten Kunststoffsubstrat, wobei sich der Brechungsindex des ersten Kunststoffsubstrats von dem Brechungsindex des zweiten Kunststoffsubstrats unterscheidet, wobei das erste Kunststoffsubstrat eine erste Oberfläche beinhaltet, die an das zweite Kunststoffsubstrat angrenzt, wobei das zweite Kunststoffsubstrat transparent ist.

11. Verfahren gemäß Anspruch 10, wobei das erste Kunststoffsubstrat durch die folgenden Schritte gebildet wird: Bereitstellen eines Formwerkzeugs, wobei das Formwerkzeug eine obere Form, eine untere Form, einen Verschiebeblock und einen Kern beinhaltet, wobei die obere Form eine erste Formkavität definiert, wobei die obere Form an der geneigten Wand gegenüber dem Kern ein zweites Muster bildet, wobei das zweite Muster eine Vielzahl von konkaven Abschnitten beinhaltet; Verschieben des Verschiebeblocks, sodass der Kern nach der ersten Formkavität ausgerichtet wird, um zwischen der ersten Formkavität und dem Kern eine erste Formkammer zu bilden; Einführen eines geschmolzenen Kunststoffmaterials in die Formkammer; und Verfestigen des geschmolzenen Kunststoffmaterials, um das erste Kunststoffsubstrat zu bilden; wobei das erste Muster dem zweiten Muster entspricht.

12. Verfahren gemäß Anspruch 11, wobei der konkave Abschnitt in der oberen Form 0,8 x 0,8 mm² bis 2 x 2 mm² beträgt.

13. Verfahren gemäß Anspruch 11, wobei das Verfahren gemäß Anspruch 9, wobei der konkave Abschnitt in der oberen Form 1 x 1 mm² beträgt.

14. Verfahren gemäß Anspruch 11, wobei der konkave Abschnitt einen zweiten höchsten Punkt und einen zweiten niedrigsten Punkt aufweist, wobei der Wert des Winkels zwischen der Linie von dem zweiten höchsten Punkt und einem zweiten niedrigsten Punk und der Horizontalen 15° bis 35° beträgt.

15. Verfahren gemäß Anspruch 14, wobei der Höhenunterschied zwischen dem zweiten höchsten Punkt und zweiten niedrigsten Punkt 0,3 mm bis 0,6 mm beträgt.

## Revendications

1. Un article en plastique, comprenant :
un premier substrat en plastique, le premier substrat en plastique étant transparent ; et
un deuxième substrat en plastique formé sur le premier substrat en plastique, le deuxième substrat en plastique étant transparent ;
dans lequel l'indice de réfraction du premier substrat en plastique est différent de l'indice de réfraction du deuxième substrat en plastique, le premier substrat en plastique comprend une première surface contigüe au deuxième substrat en plastique, la première surface présente un premier motif, le premier motif comprend une pluralité de premières portions convexes.

2. L'article en plastique tel que revendiqué dans la revendication 1, dans lequel le premier substrat en plastique comprend en outre une deuxième surface opposée à la première surface, l'aire projetée des portions convexes dans la deuxième surface allant de 0,8 x 0,8 mm² à 2 x 2 mm².

3. L'article en plastique tel que revendiqué dans la revendication 2, dans lequel l'aire projetée des portions convexes dans la deuxième surface est de 1 x 1 mm².

4. L'article en plastique tel que revendiqué dans la revendication 1, dans lequel la portion convexe présente un premier point le plus haut et un premier point le plus bas, l'angle entre la droite passant par le premier point le plus haut et le premier point le plus bas et l'horizontale valant de 15° à 35°.

5. L'article en plastique tel que revendiqué dans la revendication 4, dans lequel la différence de hauteur entre le premier point le plus haut et le premier point le plus bas va de 0,3 mm à 0,6 mm.

6. L'article en plastique tel que revendiqué dans la revendication 5, dans lequel la différence de hauteur entre le premier point le plus haut et le premier point le plus bas est de 0,5 mm.

7. L'article en plastique tel que revendiqué dans la revendication 1, dans lequel le premier substrat en plastique est fait en un matériau sélectionné dans un groupe constitué du polycarbonate, du polyméthacrylate de méthyle, du polyéthylène, du polyamide, de plastiques à base d'acrylonitrile butadiène styrène, du polyuréthane, d'un mélange de polycarbonate et de fibre de verre et d'un mélange de polycarbonate et de polytéréphtalate d'éthylène, de préférence du polyméthacrylate de méthyle ou du polycarbonate.

8. L'article en plastique tel que revendiqué dans la revendication 1, dans lequel le deuxième substrat en plastique est fait en un matériau sélectionné dans un groupe constitué du polyméthacrylate de méthyle, du polyamide, de plastiques à base d'acrylonitrile butadiène styrène, du polyuréthane, de la résine époxy, d'un mélange de polycarbonate et de fibre de verre et d'un mélange de polycarbonate et de polytéréphtalate d'éthylène.

9. L'article en plastique tel que revendiqué dans la revendication 1, dans lequel le premier motif est formé par moulage par injection ou par gravure laser.

10. Un procédé permettant de fabriquer l'article en plastique comprenant :
le fait de fournir un premier substrat en plastique, le premier substrat en plastique étant transparent, le premier substrat en plastique comprenant une première surface, la première surface présentant un premier motif, le premier motif comprenant une pluralité de premières portions convexes ;
le fait de former un deuxième substrat en plastique sur le premier substrat en plastique,
dans lequel l'indice de réfraction du premier substrat en plastique est différent de l'indice de réfraction du deuxième substrat en plastique, le premier substrat en plastique comprend une première surface contigüe au deuxième substrat en plastique, le deuxième substrat en plastique est transparent.

11. Le procédé de la revendication 10, dans lequel le premier substrat en plastique est formé en appliquant les étapes suivantes consistant à : fournir un outil de moulage, l'outil de moulage comprenant un moule supérieur, un moule inférieur, un bloc coulissant et un noyau, le moule supérieur définissant une première cavité de moulage, le moule supérieur formant un deuxième motif sur la paroi inclinée opposée au noyau, le deuxième motif comprenant une pluralité de portions concaves ; faire coulisser le bloc coulissant pour faire s'aligner le noyau avec la première cavité de moulage afin de former une première chambre de moulage entre la première cavité de moulage et le noyau ; introduire une matière plastique en fusion dans la chambre de moulage ; et solidifier la matière plastique en fusion pour former le premier substrat en plastique ; dans lequel premier motif correspond au deuxième motif.

12. Le procédé de la revendication 11, dans lequel la portion concave dans le moule supérieur va de 0,8 x 0,8 mm² à 2 x 2 mm².

13. Le procédé de la revendication 11, dans lequel la méthode de la revendication 9, dans lequel la portion concave dans le moule supérieur est de 1 x 1 mm².

14. Le procédé de la revendication 11, dans lequel la portion concave présente un deuxième point le plus haut et un deuxième point le plus bas, l'angle entre la droite passant par le deuxième point le plus haut et le deuxième point le plus bas et l'horizontale valant de 15° à 35°.

15. Le procédé de la revendication 14, dans lequel la différence de hauteur entre le deuxième point le plus haut et le deuxième point le plus bas va de 0,3 mm à 0,6 mm.
